**Europäisches Patentamt**

**European Patent Office**

**Office européen des brevets**

(19)

(11) Veröffentlichungsnummer: **0 063 175 B1**

(12) # EUROPÄISCHE PATENTSCHRIFT

(45) Veröffentlichungstag der Patentschrift:
27.08.86

(51) Int. Cl.⁴: **G 02 F 1/11**

(21) Anmeldenummer: **81108730.3**

(22) Anmeldetag: **22.10.81**

(54) Optischer Modulator, Verfahren zu seinem Betrieb und seine Verwendung.

(30) Priorität: **16.04.81 DE 3115562**

(43) Veröffentlichungstag der Anmeldung:
**27.10.82 Patentblatt 82/43**

(45) Bekanntmachung des Hinweises auf die Patenterteilung:
**27.08.86 Patentblatt 86/35**

(84) Benannte Vertragsstaaten:
**DE FR GB**

(56) Entgegenhaltungen:
**EP - A - 0 047 196**
**US - A - 3 850 503**

**JAPANESE JOURNAL OF APPLIED PHYSICS, Band 17, Nr. 7, Juli 1978, Seiten 1231-1234, Tokyo, JP. T. KONDO et al.: "Optical tunable switched directional couplers consisting of two thin-film waveguides using surface acoustic waves"**
**PROCEEDINGS OF THE IEEE-OPT. COMM., Band 68, Nr. 6, Juni 1980, Seiten 689-731, New York, USA D. BOTEZ et al.: "Components for optical communications systems: A review"**

(73) Patentinhaber: **Siemens Aktiengesellschaft Berlin und München, Wittelsbacherplatz 2, D-8000 München 2 (DE)**

(72) Erfinder: **Kersten, Raif Thomas, Prof. Dr.-Phil., Hildegardstrasse 2a, D-1000 Berlin 31 (DE)**
Erfinder: **von Helmolt, Clemens, Dipl.-Ing., Schlüterstrasse 7, D-1000 Berlin 12 (DE)**
Erfinder: **Schlaak, Helmut F., Dipl.-Ing., Saatwinkler Damm 139, D-1000 Berlin 13 (DE)**

## Beschreibung

Die vorliegende Erfindung betrifft gemäss dem Oberbegriff des Patentanspruchs 1 einen optischen Modulator mit mindestens einem passiven integriert-optischen Mach-Zehnder-Interferometer.

Ein derartiger Modulator ist aus Proc. of the IEEE 68 (1980) S. 689–731, insbesondere S. 712–713 und Fig. 37, bekannt. Bei diesem Modulator sind die Interferometerarme in LiNbO$_3$ ausgebildet und die Modulation erfolgt durch Anlegen von Spannungen an Steuerelektroden auf dem Substrat. Die Steuerelektroden müssen in bezug auf die Interferometerarme justiert werden.

Der vorliegenden Erfindung liegt die Aufgabe zugrunde, einen optischen Modulator der eingangs genannten Art anzugeben, welcher ohne aufwendige Justierung der Steuereinrichtung hergestellt werden kann.

Diese Aufgabe wird gemäss dem kennzeichnenden Teil des Patentanspruchs 1 dadurch gelöst, dass der Modulator eine Vorrichtung aufweist, welche akustische Oberflächenwellen erzeugt und quer zu den Interferometerarmen durch das Interferometer hindurchschickt, so dass zwischen den Interferometerarmen eine Phasenverschiebung des Lichts erzeugt wird.

Es sei darauf hingewiesen, dass aus der US-A-3 850 503 ein optischer Modulator aus einem passiven optischen Richtkoppler und einer Vorrichtung bekannt ist, welche akustische Oberflächenwellen erzeugt, die sich in Längsrichtung des Richtkopplers ausbreiten und ihn modulieren.

Ein Vorteil dieses erfindungsgemässen optischen Modulators ist, dass eine einzige akustische Oberflächenwelle viele monomodale passive integriert-optische Wellenleiter-Anordnungen modulieren kann.

Ein passives integriert-optisches Interferometer, welches von einer akustischen Oberflächenwelle geschaltet wird, wird als SAWDIF (surface acoustic wave driven interferometer) bezeichnet.

Das SAWDIF kann aus sämtlichen monomodalen, integriert-optischen Interferometern, z.B. vom Mach-Zehnder-Typ, aufgebaut werden.

Zur Erzeugung von akustischen Oberflächenwellen weist der optische Modulator mindestens einen Interdigital-Wandler auf.

Bei einem SAWDIF ist der Abstand der beiden Wellenleiter eines passiven integriert-optischen Interferometers vorzugsweise gleich der halben akustischen Wellenlänge oder einem ungeradzahligen ganzzahligen Vielfachen davon. Im optimalen optischen Arbeitspunkt kann die Frequenzmodulation bei einem SAWDIF weitgehend linear erfolgen. Vorteilhafterweise kann bei einem SAWDIF die statische Phasenverschiebung zwischen zwei Interferometerarmen elektrisch gesteuert werden. Mit einem aktiven Leistungskoppler kann bei einem SAWDIF die Lichtleistung in zwei Interferometerarmen genau eingestellt werden. Zur Erhöhung der Bandbreite kann bei einem SAWDIF der Abstand zweier Interferometerarme in kontinuierlicher Änderung verlaufen. Vorteilhafterweise kann bei einem SAWDIF zwischen zwei Interferometerarmen eine Metallauflage aufgebracht werden, welche bei allen Frequenzen eine maximale Modulationstiefe bewirkt.

Die akustische Oberflächenwelle kann frei auf dem Substrat laufen oder an einen akustischen Wellenleiter gebunden sein. Ferner ist ein Resonatorbetrieb der akustischen Oberflächenwelle möglich, der infolge der stehenden Welle einen höheren Wirkungsgrad bei geringerer Bandbreite hervorruft. Zur Signalverarbeitung und Signalformung können mehrere akustische Oberflächenwellen verwendet werden.

Vorteilhafte Ausgestaltungen der Erfindung sind anhand von verschiedenen Ausführungsbeispielen in der Zeichnung dargestellt und werden im folgenden näher erläutert.

Fig. 1 zeigt eine Draufsicht auf ein SAWDIF, bestehend aus Interferometer und Interdigitalwandler (IDT),

Fig. 2 zeigt einen Querschnitt durch das Interferometer von Fig. 9,

Fig. 3 bis 8 zeigen verschiedene Ausführungsformen des SAWDIF.

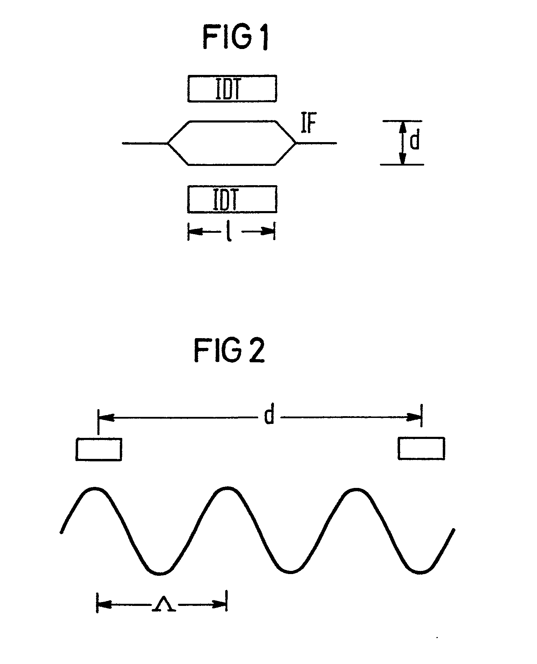

Den grundsätzlichen Aufbau eines Interferometers, das von einer akustischen Oberflächenwelle geschaltet wird, SAWDIF, zeigt Fig. 1 im Schema. Das SAWDIF enthält einen oder mehrere passive integriert-optische Interferometer IF (W.E. Martin: Appl. Phys. Lett. 26, 562 (1975)) und einen oder mehrere Interdigital-Wandler IDT. Der Aufbau eines derartigen optischen Modulators ist aus sämtlichen Materialien möglich, welche die Herstellung optischer Streifenwellenleiter, z.B. durch Eindiffusion von Fremdatomen, ermöglichen und selbst piezoelektrisch sind, z.B. Lithiumniobat bzw. wenn sie nicht selbst piezoelektrisch sind, das Aufbringen einer piezoelektrischen Schicht aus z.B. Zinkoxid zulassen.

Das in Fig. 1 gezeigte SAWDIF enthält ein Mach-Zehnder-Interferometer IF der Länge $\lambda$ und dem Abstand d der Wellenleiterarme sowie einen Interdigital-Wandler IDT, der auf eine gewünschte Mittenfrequenz und Bandbreite optimiert ist (A.J. Slobodnik, Jr., Proc. TEEE 64 (1976), S. 5). Die Ausgangslichtleistung $P_2$ eines passiven, monomodalen Mach-Zehnder-Interferometers IF wird durch

$$P_2 \sim \frac{1}{2}P_1[1 + \cos\Delta\varphi]$$

beschrieben, wobei $P_1$ die Eingangslichtleistung und $\Delta\varphi$ eine Phasenverschiebung zwischen den beiden Armen des Interferometers IF bedeuten.

Läuft eine akustische Oberflächenwelle SAW der Leistung $P_{ac}$ mit der Wellenlänge $\Lambda$ quer durch das Interferometer IF, so tritt zwischen den Interferometerarmen die Phasenverschiebung

$$\Delta\varphi(t) = \emptyset_o \pm K_1 \sqrt{P_{ac}} \, \emptyset(t, d, \Lambda)$$

auf. $\Phi_o$ ist hierbei eine statische Phasenverschiebung zwischen den beiden Interferometerarmen und $K_1$ ist eine Konstante, die von der Lichtwellenlänge den akustooptischen sowie im Falle eines piezoelektrischen Substrats auch von den elektrooptischen Eigenschaften des Kristalls abhängen. Die Funktion $\Phi$ (t, d,$\Lambda$) beschreibt die Phasenlage des Lichts in Abhängigkeit von der Zeit t und der Wellenlänge $\Lambda$ der akustischen Oberflächenwelle SAW, sowie dem Abstand d der beiden Wellenleiter.

Für

$$d = (2n+1) \cdot \frac{\Lambda}{2} \qquad (n = 0,1,2\ldots)$$

tritt ein Maximum der Modulationstiefe auf, im optimalen optischen Arbeitspunkt (R. Keil et al., Siemens Forschungs- und Entwicklungsberichte 9 (1980), S. 26–32, sowie auch F.J. Leonberger, Opt. Let. 5, 312 (1980)) bei

$$\emptyset_o = (2n+1) \frac{\pi}{2}$$

ist eine lineare Frequenzmodulation möglich.

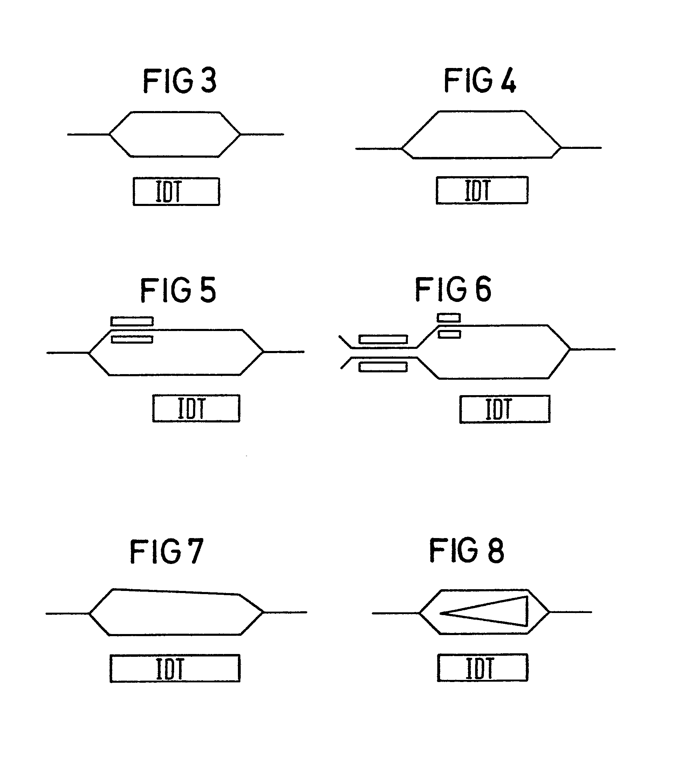

Das SAWDIF kann aus sämtlichen monomodalen, integriert-optischen Interferometern, z.B. vom Mach-Zehnder-Typ, aufgebaut werden, z.B. entsprechend den Figuren 3 bis 8. Die Figuren 3, 4 und 5 zeigen das SAWDIF mit einer unterschiedlichen statischen Phasenverschiebung $\Phi_o$, die in Fig. 5 elektrisch gesteuert werden kann. In Fig. 6 wird die Y-Verzweigung durch einen aktiven 3-db-Koppler ersetzt, so dass sich die Lichtleistung in den beiden Interferometerarmen genau einstellen lässt, um die höchste Modulationstiefe zu erzielen (R. Keil et al., aaO). Fig. 7 und Fig. 8 zeigen breitbandige Versionen des SAWDIF: In Fig. 7 wird der Abstand d der Wellenleiter kontinuierlich geändert und der zugehörige Interdigital-Wandler IDT strahlt links die niedrigen, rechts die hohen Frequenzen ab. In Fig. 8 wird die Phasengeschwindigkeit der akustischen Oberflächenwelle SAW z.B. durch eine Metallauflage (A.A. Oliner, Topics in Appl. Physics, Acoustic Surface Waves, Springer Verlag, Berlin (1978)) zwischen den Interferometerarmen so angepasst, dass sowohl bei niedrigen als auch bei hohen Frequenzen die maximale Modulationstiefe, wie oben näher ausgeführt, erreicht wird.

Auch beim SAWDIF kann die akustische Oberflächenwelle SAW frei auf dem Substrat laufen oder an einen akustischen Wellenleiter (A.A. Oliner, aaO.) gebunden sein. Ferner ist auch beim SAWDIF der Resonatorbetrieb der akustischen Oberflächenwelle SAW möglich, der infolge der stehenden Welle einen höheren Wirkungsgrad bei geringer Bandbreite hervorruft. Zur Signalverarbeitung und -formung können auch beim SAWDIF mehrere akustische Oberflächenwellen verwendet werden.

Die Interdigital-Wandler IDT für die näher beschriebenen Ausführungsbeispiele des SAWDIF lassen sich nach den von A.J. Slobodnik, Jr., aaO. und von A.A. Oliner, aaO. genannten Verfahren aufbauen und optimieren. Je nach Anwendung werden ein bzw. zwei Interdigital-Wandler IDT sowie ein Reflektor (A.A. Oliner, aaO.) benötigt.

Ein Anwendungsgebiet des SAWDIF ist die Amplitudenmodulation in einem weiten Frequenzbereich. Entsprechend dem vorne gezeigten Zusammenhang wird die dem Interdigital-Wandler IDT zugeführte Frequenz, sofern sie innerhalb der Bandbreite des Interdigital-Wandlers IDT liegt, linear in eine optische Leistungsmodulation umgesetzt, wobei bei entsprechender Dimensionierung eine grosse Bandbreite und ein guter Modulationshub gewährleistet ist. Hierbei entspricht entweder die akustische Oberflächenwelle SAW direkt dem Nachrichtensignal oder das Nachrichtensignal ist in der akustischen Oberflächenwelle SAW enthalten.

Das SAWDIF bietet gegenüber elektrooptischen Modulatoren den Vorteil, dass einerseits während der Fertigung keine aufwendige Justierung des Interdigital-Wandlers IDT in bezug auf die Wellenleiter erforderlich ist und zum anderen, dass eine einzige akustische Oberflächenwelle SAW viele Mach-Zehnder-Interferometer modulieren kann.

**Patentansprüche**

1. Optischer Modulator mit mindestens einem passiven integriert-optischen Mach-Zehnder-Interferometer, dadurch gekennzeichnet, dass der Modulator eine Vorrichtung aufweist, welche eine akustische Oberflächenwelle erzeugt und quer zu den Interferometerarmen durch das Interferometer hindurchschickt, so dass zwischen den Interferometerarmen eine Phasenverschiebung des Lichts erzeugt wird.

2. Modulator nach Anspruch 1, dadurch gekennzeichnet, dass der Abstand der beiden Interferometerarme gleich der halben Wellenlänge der akustischen Oberflächenwelle oder einem ungeradzahligen ganzzahligen Vielfachen davon ist.

3. Modulator nach Anspruch 1 oder 2, dadurch gekennzeichnet, dass er im optimalen optischen Arbeitspunkt arbeitet, bei dem eine lineare Frequenzmodulation erfolgt.

4. Modulator nach einem der vorhergehenden Ansprüche, gekennzeichnet durch eine elektrische Steuerung der statischen Phasenverschiebung zwischen zwei Interferometerarmen.

5. Modulator nach einem der vorhergehenden Ansprüche, gekennzeichnet durch einen aktiven Leistungskoppler, mit dem die Lichtleistung in den zwei Interferometerarmen genau einstellbar ist.

6. Modulator nach einem der vorhergehenden Ansprüche, dadurch gekennzeichnet, dass zur Erhöhung der Bandbreite der Abstand zwischen den zwei Interferometerarmen variiert.

7. Modulator nach einem der vorhergehenden Ansprüche, gekennzeichnet durch eine Metallauflage zwischen den zwei Interferometerarmen, welche bei allen verwendeten Frequenzen eine maximale Modulationstiefe bewirkt.

8. Modulator nach einem der Ansprüche 1 bis 7, dadurch gekennzeichnet, dass die Vorrichtung, welche die akustische Oberflächenwelle erzeugt, so ausgestaltet ist, dass sie eine frei auf dem Substrat laufende akustische Oberflächenwelle erzeugt.

9. Modulator nach einem der Ansprüche 1 bis 7, dadurch gekennzeichnet, dass die Vorrichtung, welche die akustische Oberflächenwelle erzeugt, einen akustischen Wellenleiter aufweist, an den die erzeugte akustische Oberflächenwelle gebunden ist.

10. Modulator nach einem der Ansprüche 1 bis 9, dadurch gekennzeichnet, dass die Vorrichtung, welche die akustische Oberflächenwelle erzeugt, so bemessen ist, dass eine von ihr erzeugte akustische Oberflächenwelle eine stehende Welle ist.

## Claims

1. An optical modulator having at least one passive, integrated Mach-Zehnder interferometer, characterised in that the modulator has a device which produces an acoustic surface wave that is transmitted through the interferometer transversely to the interferometer arms to produce a phase-shift of the light between the interferometer arms.

2. A modulator as claimed in Claim 1, characterised in that the interval between the two interferometer arms is equal to half the wavelength of the acoustic surface waves or to an odd whole-numbered multiple thereof.

3. A modulator as claimed in Claim 1 or 2, characterised in that it operates at the optimum optical operating point at which a linear frequency modulation takes place.

4. A modulator as claimed in one of the preceding Claims, characterised by an electric control of the static phase shift between two interferometer arms.

5. A modulator as claimed in one of the preceding Claims, characterised by an active power coupler by which the light power in the two interferometer arms can be precisely adjusted.

6. A modulator as claimed in one of the preceding Claims, characterised in that the interval between the two interferometer arms varies to increase the band width.

7. A modulator as claimed in one of the preceding Claims, characterised by a metal base between the two interferometer arms to produce a maximum modulation depth at all the frequencies used.

8. A modulator as claimed in one of Claims 1 to 7, characterised in that the device which produces the acoustic surface wave produces an acoustic surface wave which moves freely over the substrate.

9. A modulator as claimed in one of Claims 1 to 7, characterised in that the device which produces the acoustic surface wave comprises an acoustic waveguide to which the generated acoustic surface wave is bound.

10. A modulator as claimed in one of Claims 1 to 9, characterised in that the device which produces the acoustic surface wave is such that an acoustic surface wave it produces is a standing wave.

## Revendications

1. Modulateur optique comportant au moins un interféromètre de Mach-Zehnder passif réalisé selon l'optique intégrée, caractérisé par le fait que le modulateur possède un dispositif qui produit une onde acoustique de surface et l'envoie à travers l'interféromètre, transversalement par rapport aux bras de ce dernier, de sorte qu'un déphasage de la lumière est produit entre les bras de l'interféromètre.

2. Modulateur suivant la revendication 1, caractérisé par le fait que la distance entre les deux bras de l'interféromètre est égale à la demi-longueur d'onde de l'onde acoustique de surface ou à un multiple entier impair de cette demi-longueur d'onde.

3. Modulateur suivant la revendication 1 ou 2, caractérisé par le fait qu'il travaille au point optique optimal de fonctionnement, pour lequel il se produit une modulation linéaire de fréquence.

4. Modulateur suivant l'une des revendications précédente, caractérisé par une commande électrique du déphasage statique entre deux bras de l'interféromètre.

5. Modulateur suivant l'une des revendications précédentes, caractérisé par un coupleur de puissance actif, au moyen duquel la puissance lumineuse peut être réglée de façon précise dans les deux bras de l'interféromètre.

6. Modulateur suivant l'une des revendications précédente, caractérisé par le fait qu'en vue d'accroître la largeur de bande, on modifie la distance entre les deux bras de l'interféromètre.

7. Modulateur suivant l'une des revendications précédentes, caractérisé par une couche métallique disposée entre les deux bras de l'interféromètre et qui fournit une profondeur maximale de modulation pour toutes les fréquences utilisées.

8. Modulateur suivant l'une des revendications 1 à 7, caractérisé par le fait que le dispositif qui produit l'onde acoustique de surface, est agencé de telle sorte qu'il produit une onde acoustique de surface circulant librement sur le substrat.

9. Modulateur suivant l'une des revendications 1 à 7, caractérisé par le fait que le dispositif qui produit l'onde acoustique de surface, possède un guide d'ondes acoustiques, auquel est confinée l'onde acoustique de surface produite.

10. Modulateur suivant l'une des revendications 1 à 6, caractérisé par le fait que le dispositif qui produit l'onde acoustique de surface, est dimensionné de telle sorte qu'une onde acoustique de surface, qu'il produit, est une onde stationnaire.

# FIG 1

# FIG 2

## FIG 3

IDT

## FIG 4

IDT

## FIG 5

IDT

## FIG 6

IDT

## FIG 7

IDT

## FIG 8

IDT